# FASCICULE DE BREVET EUROPEEN

(11) **EP 1 564 138 B1**
(45) Date de publication et mention de la délivrance du brevet: **09.08.2006**
(21) Numéro de dépôt: 05300087.3
(22) Date de dépôt: 03.02.2005
(51) Int. Cl.: B64D 11/00, E04F 11/04, E06C 7/18

(54) **Echelle de communication entre un niveau supérieur et un niveau inférieur d'un aéronef, et aéronef muni d'une telle échelle**
Übergangstreppe zwischen einer oberen und einer unteren Ebene eines Flugzeuges, und damit ausgerüstetes Flugzeug
Communication ladder between an upper and a lower level of an aircraft, and aircraft equipped with such a ladder

(30) Priorité: 10.02.2004 FR 0450233
(43) Date de publication de la demande: 17.08.2005
(73) Titulaire: AIRBUS France, 31060 Toulouse (FR)
(72) Inventeur: Guering, Bernard, 31850 Montrabe (FR)
(74) Mandataire: Camus, Olivier Jean-Claude

(56) Documents cités:
- DE-C- 4 223 320
- FR-A- 2 496 570
- GB-A- 416 183
- SU-A- 498 213
- PATENT ABSTRACTS OF JAPAN vol. 1999, no. 12, 29 octobre 1999 (1999-10-29) -& JP 11 181982 A (HITACHI PLANT ENG & CONSTR CO LTD), 6 juillet 1999 (1999-07-06)

## Description

L'invention a pour objet une échelle pour aéronef, apte à assurer une communication entre un niveau supérieur et un niveau inférieur dudit aéronef. Plus précisément, l'invention a pour objet une échelle munie d'un dispositif de sécurité éliminant des risques de chutes de personnes ou d'objets depuis le niveau supérieur de l'aéronef jusqu'au sol. L'invention trouve des applications dans le domaine de l'aéronautique. L'invention trouve par exemple des applications dans le domaine de la sécurité d'agents de maintenance dans les aéronefs.

Un but de l'invention est de garantir la sécurité des utilisateurs d'un aéronef comportant au moins deux niveaux, lorsqu'une trappe de communication entre un premier et un deuxième niveau de l'aéronef est ouverte.

Dans le domaine de l'aéronautique, il existe des aéronefs comportant au moins deux niveaux, ou étages. Un premier niveau, ou niveau supérieur, comprend par exemple un poste de pilotage. Un deuxième niveau, ou niveau inférieur, comprend par exemple une soute.

Dans un tel aéronef, une trappe inférieure, ménagée dans un plancher inférieur permet une communication entre la soute et l'extérieur de l'aéronef. Ainsi, il est possible d'entreposer dans la soute des objets encombrants, qui sont emmenés dans la soute directement depuis l'extérieur de l'aéronef. De même, il existe une trappe supérieure, ménagée dans un plancher supérieur, permettant une communication entre le niveau supérieur et le niveau inférieur. Un utilisateur peut, par exemple pour assurer la maintenance, descendre depuis le poste de pilotage jusqu'à la soute, par l'intermédiaire d'une échelle de liaison disposée entre le niveau supérieur et le niveau inférieur.

On connaît, comme échelle de liaison entre le niveau supérieur et le niveau inférieur d'un aéronef, une échelle dont une extrémité basse est montée en rotation sur le plancher inférieur. Une extrémité haute, opposée à l'extrémité basse, est libre. Une telle échelle permet, lorsque la trappe inférieure et la trappe supérieure sont en vis à vis, de dégager un accès à la soute depuis l'extérieur de l'aéronef malgré la présence de l'échelle de liaison dans ladite soute.

Lorsqu'un utilisateur souhaite accéder depuis le poste de pilotage à la soute, l'échelle est dans une position d'utilisation. En position d'utilisation, l'extrémité haute de l'échelle vient en butée contre un côté de la trappe supérieure. Dans cette position d'utilisation, l'échelle de liaison sécurise un accès à la trappe inférieure. C'est à dire que l'échelle s'étend en diagonale entre la trappe supérieure et la trappe inférieure. Un utilisateur, situé au niveau supérieur de l'aéronef et tombant par la trappe supérieure, ne peut pas passer à travers la trappe inférieure, puisque l'accès à la trappe inférieure est encombré par l'échelle.

A l'inverse, quand un utilisateur souhaite dégager l'accès à la trappe inférieure, il fait basculer l'échelle de liaison jusqu'à ce qu'elle vienne en butée contre un côté opposé de la trappe supérieure. L'échelle s'étend alors parallèlement à un axe de la trappe supérieure et de la trappe inférieure. Dans cette position de maintenance, l'échelle de liaison ne fait plus obstacle à un accès à la trappe inférieure.

Une telle solution permet d'optimiser un encombrement de l'échelle de liaison dans la soute. En effet, l'échelle est fixe, mais peut basculer entre deux positions différentes de manière à permettre une utilisation de ladite échelle ou à dégager un espace dans la soute.

On connaît aussi de telles échelles en dehors du domaine aéronautique, telle que celle représentée dans JP-11-181982 A.

Cependant, dans le cas où les trappes sont au moins partiellement en vis à vis, une telle solution peut s'avérer dangereuse. En effet, lorsque l'échelle est en position de maintenance, la trappe inférieure peut être ouverte. Si la trappe supérieure est également ouverte, un objet ou une personne peut tomber depuis le plancher supérieur jusqu'au sol en passant par la trappe inférieure ouverte. Par ailleurs, un objet tombant du niveau supérieur peut heurter et blesser une personne située au niveau inférieur.

Par ailleurs, le poste de pilotage, comme la soute, sont souvent encombrés. De plus, les planchers de l'aéronef sont généralement épais. Une telle épaisseur est nécessaire notamment pour permettre de soutenir les charges. La présence de la trappe supérieure ouverte n'est donc pas aisément détectable. Ceci augmente les risques de chutes accidentelles.

Dans l'invention, on cherche à diminuer les risques de chutes accidentelles depuis la première trappe ménagée dans le plancher supérieur jusqu'au niveau inférieur de l'aéronef ou le sol. Dans l'invention, on cherche également à informer des utilisateurs de l'aéronef, notamment des gens de maintenance, d'une ouverture de la première trappe.

Pour cela, l'invention propose une échelle munie d'un dispositif anti-chute. L'échelle selon l'invention est disposée entre une première trappe ménagée dans un plancher d'un niveau supérieur de l'aéronef et une deuxième trappe ménagée dans un plancher d'un niveau inférieur dudit aéronef. La première et la deuxième trappe sont au moins partiellement en vis à vis. L'échelle comporte une extrémité basse montée en rotation sur le plancher du niveau inférieur. Par montée en rotation, on entend que l'extrémité basse est fixée sur le plancher du niveau inférieur de manière à autoriser un débattement de l'échelle de l'avant vers l'arrière et inversement.

Une extrémité haute de l'échelle est libre et apte à venir alternativement en butée contre un premier côté et un deuxième côté de la première trappe, le premier côté étant opposé au deuxième côté. Ainsi, l'échelle peut avoir deux positions stables différentes, selon qu'elle est en butée contre le premier ou le deuxième côté de la trappe supérieure. La première position stable permet à un utilisateur de monter et descendre entre le niveau inférieur et le niveau supérieur de l'aéronef. La deuxième position stable permet de dégager l'espace dans la soute, en diminuant un encombrement de l'échelle dans ladite soute et en libérant un accès à la trappe inférieure.

Par ailleurs, afin d'empêcher un basculement intempestif de l'échelle lorsqu'elle se trouve dans la première ou la deuxième position stable, ladite échelle peut être munie de moyens de verrouillage. Les moyens de verrouillage comportent par exemple un crochet situé à l'endroit de l'extrémité haute de l'échelle et un anneau solidaire du plancher du niveau supérieur. Le crochet est apte à s'ancrer dans l'anneau. Ainsi, lorsqu'un utilisateur souhaite faire basculer l'échelle depuis la première position stable jusqu'à la deuxième position stable (ou inversement), il doit préalablement retirer le crochet de l'anneau.

L'échelle de l'invention est munie, à l'endroit de son extrémité haute, du dispositif anti-chute. Le dispositif anti-chute est actionné lorsque l'échelle est dans la deuxième position stable. En effet, c'est dans cette position seulement qu'une chute peut avoir lieu depuis le niveau supérieur jusqu'au sol. Le dispositif anti-chute de l'invention permet d'interdire un accès à la trappe supérieure alors même que ladite trappe supérieure est ouverte.

Dans un exemple de réalisation de l'invention, le dispositif anti-chute comporte un filet. Le filet est solidaire d'un côté de la trappe supérieure d'une part, et de l'extrémité haute de l'échelle d'autre part. La fixation du filet est telle qu'elle permet au filet d'avoir deux états. Un premier état, ou état non actif, est obtenu lorsque l'échelle est dans la première position stable. Le filet est alors détendu. Le côté du filet fixé au côté de la trappe supérieure est accolé au côté du filet fixé à l'échelle. Un deuxième état, ou état actif, est obtenu lorsque l'échelle est dans sa deuxième position stable. Le filet est alors tendu sur toute une surface d'ouverture de la trappe supérieure. Le côté du filet fixé à l'échelle est accolé au côté de la trappe supérieure opposé au côté de la trappe solidaire du filet.

Ainsi, lorsque l'échelle est dans sa deuxième position, le filet ferme l'ouverture de la trappe supérieure. Une personne située au niveau supérieur de l'aéronef et ne voyant pas que la trappe supérieure est ouverte, est retenue par le filet si par mégarde ladite personne tombe par l'ouverture de la trappe supérieure.

Dans un exemple particulier de réalisation de l'invention, il est possible de munir le dispositif anti-chute d'un dispositif d'information d'un état du dispositif anti-chute. Ainsi, les personnes situées au niveau supérieur de l'aéronef sont informées de l'ouverture de la trappe supérieure, et évite le désagrément d'être retenues dans leur chute par le dispositif anti-chute. Par ailleurs, une telle solution augmente une durée de vie du dispositif anti-chute, ledit dispositif étant uniquement sollicité lors de la chute d'objets.

L'invention a donc pour objet une échelle disposée entre une première trappe ménagée dans un plancher d'un niveau supérieur d'un aéronef et une deuxième trappe ménagée dans un plancher d'un niveau inférieur dudit aéronef, la première et la deuxième trappe étant au moins partiellement en vis à vis, une extrémité basse de l'échelle étant montée en rotation sur le plancher du niveau inférieur et une extrémité haute de l'échelle étant libre et apte à venir alternativement en butée contre un premier côté et un deuxième côté opposé de la première trappe de manière à ce que l'échelle ait une première et une deuxième position stable, caractérisé en ce que l'extrémité haute de l'échelle est munie d'un dispositif de sécurité, apte à obturer une ouverture de la première trappe lorsque l'échelle est dans la deuxième position stable.

Dans un exemple particulier de réalisation de l'invention, le dispositif de sécurité comporte un filet, ledit filet étant muni d'un premier bord fixé sur le premier côté de la première trappe, un deuxième bord du filet étant fixé sur l'extrémité haute de l'échelle.

L'invention a également pour objet un aéronef comportant un niveau supérieur et un niveau inférieur, un plancher du niveau supérieur comportant une première trappe et un plancher du niveau inférieur comportant une deuxième trappe, la première et la deuxième trappe étant au moins partiellement en vis à vis, caractérisé en ce qu'il comporte l'échelle selon l'invention.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une vue d'une partie avant d'un avion et d'une première trappe ouverte en vis à vis d'une deuxième trappe également ouverte, pouvant être muni d'une échelle de l'invention ;
- Figures 2A et 2B : une échelle munie d'un dispositif de sécurité selon un exemple de réalisation de l'invention, l'échelle étant respectivement en position d'utilisation (figure 2A) et en position de maintenance (figure 2B) ;
- Figure 3 un dispositif de sécurité muni d'un dispositif d'alerte visuelle selon un exemple de réalisation de l'invention.

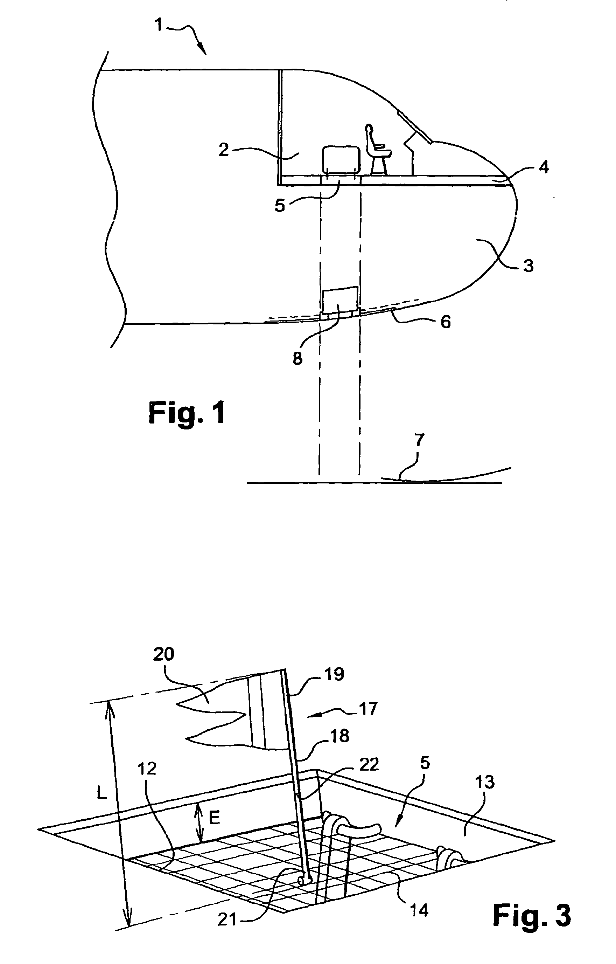

Sur la figure 1 est représentée une partie avant d'un avion 1. Par partie avant, on entend partie de l'avion 1 comportant un poste de pilotage. L'avion 1 comporte deux niveaux 2 et 3. Un premier niveau 2, ou niveau supérieur, contient le poste de pilotage. Un deuxième niveau 3, ou niveau inférieur, contient une soute. Un plancher 4, séparant le niveau supérieur 2 du niveau inférieur 3 comporte une première trappe 5. Un plancher 6, séparant le niveau inférieur 3 du sol 7 comporte une deuxième trappe 8. La première trappe 5 et la deuxième trappe 8 sont partiellement en vis à vis. L'avion 1 représenté sur la figure 1 peut être muni d'une échelle de communication entre le niveau supérieur 2 et le niveau inférieur 3 selon l'invention.

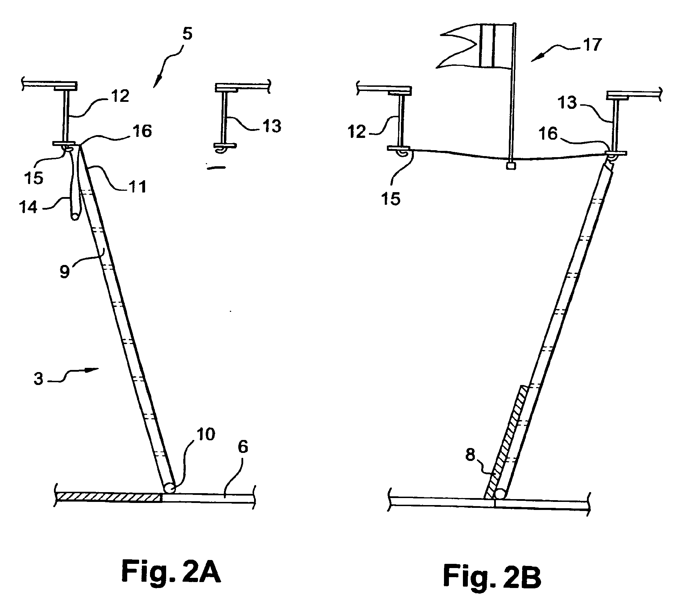

Sur les figures 2A et 2B on peut voir une échelle 9 selon un exemple de réalisation de l'invention. L'échelle 9 permet une communication entre le niveau supérieur 2 de l'avion 1 et le niveau inférieur 3.

Une extrémité basse 10 de l'échelle 9 est montée en rotation sur le plancher 6 du niveau inférieur 3. Une extrémité haute 11 de l'échelle est libre, et apte à venir en butée contre un premier côté 12 de la première trappe 5. L'extrémité haute 11 de l'échelle 9 est également apte à venir en butée contre un deuxième côté 13 de la trappe supérieure 5.

Sur la figure 2A, l'échelle 9 est en position d'utilisation. C'est-à-dire que l'extrémité haute 11 de l'échelle 9 vient en butée contre le premier côté 12 de la trappe supérieure 5, de manière à être dans une première position stable correspondant à la position d'utilisation, dans laquelle l'échelle 9 bloque un accès à la trappe inférieure 8.

L'échelle 9 est munie d'un dispositif de sécurité 14 formé par un filet. Un premier bord 15 du filet 14 est fixé sur le premier côté 12 de la première trappe 5. Un second bord 16 du filet 14, opposé au premier bord 15, est fixé à l'extrémité haute 11 de l'échelle 9.

Lorsque l'échelle 9 est en position d'utilisation (figure 2A), le filet 14 est détendu, puisque l'extrémité haute 11 de l'échelle 9, portant le second bord 16 du filet 9, est en appui sur le premier côté 12 de la première trappe 5 portant le premier bord 15 du filet 9. Le premier 15 et le second 16 bord du filet 9 sont accolés.

Lorsque l'échelle 9 est en position de maintenance (figure 2B), le filet 14 est tendu de manière à obstruer l'ouverture la première trappe 5. En effet, le second bord 16 du filet 14 est situé à l'endroit du deuxième côté 13 de la première trappe 5. Dans cette position, l'échelle 9 ne gêne pas l'ouverture de la deuxième trappe 8.

Le filet 14 peut être fixé par tous moyens au côté 12 de la trappe 5 et à l'échelle 9. Par exemple, le filet 14 est muni de quatre sangles (non représentées). Chaque sangle est fixée à une extrémité des bords 15 et 16 du filet 9. Chaque sangle est ensuite accrochée à une ferrure, chaque ferrure étant solidaire de l'extrémité haute 11 de l'échelle 9 ou du premier côté 12 de la trappe supérieure 5.

Sur la figure 2B, on peut également voir un dispositif d'alerte visuelle 17 de l'invention. Le dispositif d'alerte visuelle 17 est visible lorsque le dispositif de sécurité 14 est actionné. Ainsi, des personnes situées au niveau supérieur 2 de l'aéronef 1 sont informées du fait que la première trappe 5 est ouverte et que l'échelle 9 est en position de maintenance.

Sur la figure 3, on peut voir plus en détails le dispositif d'alerte visuelle 17. Le dispositif d'alerte visuelle 17 comporte un mât 18. Le mât 18 est parallèle à un axe de la première trappe 5 lorsque le filet 14 obstrue ladite trappe 5. Une extrémité haute 19 du mât 18 porte un drapeau 20. Une longueur L du mât 18 est strictement supérieure à une épaisseur E du plancher supérieur 4, de manière à ce que le drapeau 20 dépasse hors de la trappe supérieure 5.

Le mât 18 est articulé, de manière à ce qu'un encombrement du mât 18, lorsque le filet 14 est détendu (figure 2A), puisse être réduit pour être contenu dans le filet 14.

Par exemple, le mât 18 est articulé à l'endroit de son extrémité basse 21 de manière à ce que le mât 18 bascule quand le filet 14 est détendu, c'est à dire lorsqu'il n'obstrue pas la trappe 5.

Dans un autre exemple de réalisation de l'invention, le mât 18 est pliable. Un tel mât 18 pliable peut notamment être utilisé lorsque la longueur L du mât 18 est strictement supérieure à la moitié de la longueur du filet 14. En effet, dans ce cas, lorsque le filet 14 est détendu, c'est à dire plié en deux dans sa longueur, l'extrémité haute 19 du mât 18 non plié dépasse du filet 14 détendu. Ainsi, on peut munir le mât 18 d'une pliure 22. La pliure 22 permet de rabattre l'extrémité haute 19 du mât 18 en direction de l'extrémité basse 21 dudit mât 18. Lorsqu'on fait basculer l'échelle 9 de sa position de maintenance, pendant laquelle le mât 18 est dressé, à sa position d'utilisation, pendant laquelle le mât est replié, on plie manuellement le mât en deux, à l'endroit de la pliure 22. Le mât 18 est maintenu en position pliée dans une poche formée par le filet 14 détendu.

Afin de maintenir le mât 18 parallèle à un axe de la première trappe 5 lorsque le filet 14 est tendu, l'extrémité basse 21 du mât 18 est munie d'un lest de maintien vertical. Ainsi, lorsque le filet 14 se tend, le mât 18 se déplie et se dresse automatiquement jusqu'à sa position parallèle à l'axe de la trappe 5.

Afin d'optimiser l'efficacité du dispositif d'alerte visuelle 17 de l'invention, on peut utiliser un drapeau 20 de couleur vive, tel qu'un drapeau 20 orange ou rouge.

## Revendications

1. Echelle (9) apte à être disposée entre une première trappe (5) ménagée dans un plancher (4) d'un niveau supérieur (2) d'un aéronef (1) et une deuxième trappe (8) ménagée dans un plancher (6) d'un niveau inférieur (3) dudit aéronef, la première et la deuxième trappe étant au moins partiellement en vis à vis, une extrémité basse (10) de l'échelle apte à être étant montée en rotation sur le plancher du niveau inférieur et une extrémité haute (11) de l'échelle étant libre et apte à venir alternativement en butée contre un premier côté (12) et un deuxième côté (13) opposé de la première trappe de manière à ce que l'échelle ait une première et une deuxième position stable,
**caractérisé en ce que** l'extrémité haute de l'échelle est munie d'un dispositif de sécurité (14) apte à obturer une ouverture de la première trappe (5) lorsque l'échelle (a) est dans la deuxième position stable.

2. Echelle selon la revendication 1, **caractérisé en ce que** le dispositif de sécurité comporte un filet (14), ledit filet étant muni d'un premier bord(15) fixé sur le premier côté de la première trappe (5), un deuxième bord (16) du filet étant fixé sur l'extrémité haute de l'échelle (9).

3. Echelle selon la revendication 2, **caractérisé en ce que** le filet est fixé sur le premier côté de la première trappe (5) et à l'extrémité haute de l'échelle (a) par des ferrures.

4. Echelle selon l'une des revendications 1 à 3, **caractérisé en ce qu'**elle est munie d'un dispositif (17) d'alerte visuelle d'une position de l'échelle (a), le dispositif (17) d'alerte visuelle étant visible lorsque le dispositif de sécurité (14) obture l'ouverture de la première trappe (5).

5. Echelle selon la revendication 4, **caractérisé en ce que** le dispositif (17) d'alerte visuel comporte un mât (18), une extrémité haute (19) dudit mât étant munie d'un drapeau (20), une extrémité basse (21) du mât étant solidaire du filet.

6. Echelle selon la revendication 5, **caractérisé en ce que** l'extrémité basse est munie d'un lest (21) de maintien vertical

7. Echelle selon l'une des revendications 5 à 6, **caractérisé en ce qu'**une longueur (L) du mât est supérieure à une épaisseur (E) du plancher de la première trappe (5).

8. Echelle selon l'une des revendications 5 à 7, **caractérisé en ce que** le mât est articulé.

9. Aéronef (1) comportant un niveau supérieur (2) et un niveau inférieur (3), un plancher (4) du niveau supérieur comportant une première trappe (5) et un plancher (6) du niveau inférieur comportant une deuxième trappe (8), la première et la deuxième trappe étant au moins partiellement en vis à vis, **caractérisé en ce qu'**il comporte l'échelle (9) selon l'une quelconque des revendications 1 à 8.

## Claims

1. A ladder (9) capable of being positioned between a first hatch (5) installed in the floor (4) of an upper level (2) of an aircraft (1) and a second hatch (8) installed in the floor (6) of a lower level (3) of said aircraft, whereby the first and second hatch are at least partially in line, a lower end (10) of the ladder is capable of being rotatably mounted on the floor of the lower level and the upper end (11) of the ladder is free and capable of coming alternatively into abutment on a first side (12) and a second, opposite, side (13) of the first hatch so that the ladder has a first and a second stable position,
**characterised in that** the upper end of the ladder is fitted with a safety device (14) capable of blocking the opening of the first hatch (5) when the ladder (9) is in its second stable position.

2. A ladder in accordance with claim 1, whereby the safety device includes a net (14), said net being fitted with a first edge (15) fixed to the first side of the first hatch (5), and a second edge (16) of the net being fixed to the upper end of the ladder (9).

3. A ladder in accordance with claim 2, whereby the net is fixed to the first side of the first hatch (5) and to the upper end of the ladder (9) by fixings.

4. A ladder in accordance with any of claims 1 to 3, whereby it is fitted with a device (17) providing a visual warning of the position of the ladder (9), and whereby the visual warning device (17) is visible when the safety device (14) blocks the opening of the first hatch (15).

5. A ladder in accordance with claim 4, whereby the device (17) providing a visual warning includes a mast (18), the upper end (19) of said mast is fitted with a flag (20), and the lower end (21) of the mast is integrated with the net.

6. A ladder in accordance with claim 5, whereby the lower end is fitted with a counterweight (21) to maintain the mast in a vertical position.

7. A ladder in accordance with any of claims 5 to 6, whereby the length (L) of the mast is greater than the thickness (E) of the floor of the first hatch (5).

8. A ladder in accordance with any of claims 5 to 7, whereby the mast is articulated.

9. An aircraft (1) including an upper level (2) and a lower level (3), a floor (4) of the upper level which includes a first hatch (5) and a floor (6) of the lower level which includes a second hatch (8), whereby the first and second hatches are at least partially in line, and **characterised in that** it includes the ladder (9) in accordance with any one of claims 1 to 8.

## Patentansprüche

1. Leiter (9), die zwischen einer ersten, in einem Boden (4) auf einer höheren Ebene (2) eines Luftfahrzeugs (1) eingelassenen ersten Luke (5) und einer zweiten, in einem Boden (6) auf einer niedrigeren Ebene (3) des besagten Luftfahrzeugs eingelassenen Luke (8) angeordnet werden kann, wobei die erste und die zweite Luke sich zumindest teilweise gegenüber liegen und ein unteres Ende (10) der Leiter, das so am unteren Boden angebracht werden kann, dass sie eine Drehbewegung ausführen kann, und ein oberes Ende (11) der Leiter, das frei steht und abwechselnd an die erste (12) oder zweite (13) Seite gegenüber der ersten Luke angelegt werden kann, so dass sie eine erste und eine zweite stabile Position erreichen kann,
**dadurch gekennzeichnet, dass** das obere Ende der Leiter mit einer Sicherheitsvorrichtung (14) ausgestattet ist, die eine Öffnung der ersten Luke (5) verschließen kann, wenn sich die Leiter (9) in der zweiten stabilen Position befindet.

2. Leiter nach Anspruch 1, **dadurch gekennzeichnet, dass** die Sicherheitsvorrichtung ein Netz (14) beinhaltet, dessen einer Rand (15) an der ersten Seite der ersten Luke (5) und einer (16) an dem oberen Ende der Leiter (9) befestigt ist.

3. Leiter nach Anspruch 2, **dadurch gekennzeichnet, dass** das Netz an der ersten Seite der ersten Luke (5) und am oberen Ende der Leiter (9) durch Beschläge befestigt ist.

4. Leiter nach einem der vorherigen Ansprüche, **dadurch gekennzeichnet, dass** sie mit einer optischen Warnvorrichtung (17) je nach Position der Leiter (9) ausgestattet ist, wobei die optische Warnvorrichtung (17) dann sichtbar ist, wenn die Sicherheitsvorrichtung (14) die Öffnung der ersten Luke (5) verschließt.

5. Leiter nach Anspruch 4, **dadurch gekennzeichnet, dass** die optische Warnvorrichtung (17) einen Mast (18) beinhaltet, bei dem das obere Ende (19) mit einer Fahne (20) ausgestattet ist und das untere Ende (21) an dem Netz befestigt ist.

6. Leiter nach Anspruch 5, **dadurch gekennzeichnet, dass** das untere Ende mit einer vertikalen Haltevorrichtung (21) versehen ist.

7. Leiter nach Anspruch 5 oder 6, **dadurch gekennzeichnet, dass** eine Länge (L) des Mastes größer ist als eine Stärke (E) des Bodens der ersten Luke (5).

8. Leiter nach einem der Ansprüche 5 bis 7, **dadurch gekennzeichnet, dass** der Mast mit einem Gelenk versehen ist.

9. Luftfahrzeug (1) mit einer oberen Ebene (2) und einer unteren Ebene (3), wobei der Boden (4) der oberen Ebene seine erste Luke (5) und der Boden (6) der unteren Ebene seine zweite Luke (8) enthält und sich die erste und die zweite Luke zumindest teilweise gegenüber stehen, **dadurch gekennzeichnet, dass** es die Leiter (9) nach einem beliebigen Anspruch 1 bis 8 beinhaltet.
